(19) Europäisches Patentamt
European Patent Office
Office européen des brevets

(11) **EP 3 266 310 B1**

(12) **EUROPEAN PATENT SPECIFICATION**

(45) Date of publication and mention
of the grant of the patent:
**24.06.2020 Bulletin 2020/26**

(21) Application number: **16761039.3**

(22) Date of filing: **29.02.2016**

(51) Int Cl.:
*A23C 9/152* [(2006.01)]     *A23C 9/16* [(2006.01)]
*A23L 33/00* [(2016.01)]     *A23L 33/13* [(2016.01)]

(86) International application number:
**PCT/CN2016/074813**

(87) International publication number:
**WO 2016/141812 (15.09.2016 Gazette 2016/37)**

(54) **NUCLEOTIDE COMPOSITION AND APPLICATION IN FOOD THEREOF**

NUKLEOTIDZUSAMMENSETZUNG UND ANWENDUNG DAVON IN LEBENSMITTELN

COMPOSITION NUCLÉOTIDIQUE ET SON APPLICATION DANS DES PRODUITS ALIMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2015 CN 201510099850**

(43) Date of publication of application:
**10.01.2018 Bulletin 2018/02**

(73) Proprietors:
• **Inner Mongolia Yili Industrial Group Co., Ltd.
Inner Mongolia 010110 (CN)**
• **Inner Mongolia Dairy Technology Research
Institute Co., Ltd.
Inner Mongolia 010110 (CN)**

(72) Inventors:
• **FANG, Fang
Hohhot
Inner Mongolia 010110 (CN)**
• **LI, Ting
Hohhot
Inner Mongolia 010110 (CN)**
• **ZHAO, Zifu
Hohhot
Inner Mongolia 010110 (CN)**
• **QI, Bingli
Hohhot
Inner Mongolia 010110 (CN)**
• **SITU, Wenyou
Hohhot
Inner Mongolia 010110 (CN)**
• **LI, Wei
Hohhot
Inner Mongolia 010110 (CN)**
• **LIU, Biao
Hohhot
Inner Mongolia 010110 (CN)**
• **ZHAO, Hongxia
Hohhot
Inner Mongolia 010110 (CN)**
• **CHEN, Qingshan
Hohhot
Inner Mongolia 010110 (CN)**

(74) Representative: **Hoffmann Eitle
Patent- und Rechtsanwälte PartmbB
Arabellastraße 30
81925 München (DE)**

(56) References cited:
WO-A1-2014/042504     AU-B2- 666 157
CN-A- 1 097 598        CN-A- 1 282 585
CN-A- 1 364 417        CN-A- 1 703 152
US-A- 4 994 442        US-A1- 2010 284 980

**Description**

**Technical field**

Provided is a nucleotide composition for use in a method of promoting reparation of enterocytes after damage caused by oxidation. Provided is also a food for use in a method of promoting reparation of enterocytes after damage caused by oxidation.

**Background**

In the recent years, many experiments have been provided showing the important function of nucleotides in living body. For example, nucleotides may be used to enhance the functions of immune system and gastrointestinal tract of the body. Meanwhile, cowmilk-based milk substitute is an importance supplementary source of food for infant. Due to the low content of nucleotide and derivative thereof in cow milk, it is important to add foreign nucleotides into cowmilk-based milk substitute for growth and development (e.g. gastrointestinal tract development) and immune enhancement of the body, especially for that of the infant.

US 4,994,442 discloses addition of various nucleotides into baby formula food could enhance immune response of T cell. However, the nucleotide components (CMP, AMP, UMP, GMP and IMP) are each added into the formula food in an equal amount. EP 1549158 discloses a baby milk composition, comprising 3.2-15.4 mg/L of CMP, 1.8-11.0 mg/L of UMP, 1.8-8.0 mg/L of GMP, 0.1-2.2 mg/L of IMP and 2.5-13.2 mg/L of AMP. However, this composition is only useful for premature baby and none of possible effects was described.

US 2010/284980 A1 discloses a powdered infant formula comprising a nucleotide mixture along with other components, which can be used in promoting growth and development, as well as in promoting growth of intestinal beneficial micro-organisms, especially in an infant.

WO 2014/042504 A1 is related to the obtaining of a nutritional formula for the feeding of preterm born infants. The formula comprises nucleotides along with other components, in concentrations sufficient enough to satisfy nutritional requirements of premature children, besides being better-tolerated.

AU 93320 03 B discloses a medicinal agent capable of promoting learning ability development, containing, as active ingredient, a nucleotide mixture comprising cytidine monophosphate, uridine monophosphate, adenosine monophosphate, guanosine monophosphate, inosine monophosphate, etc.

US 4 994 442 A relates to improved infant formulas which are enriched with specific nucleosides, nucleotides, or mixtures thereof and are for use in enhancing the infants immune response, improving cell immunity and enhancing intestinal repair in patients with intestinal diseases.

On the basis of the prior art, to sufficiently exert the function of nucleotides on growth and development and optimize the effect of nucleotides as food additive, the present inventor has performed extensive experiments to adjust the components and proportions of nucleotides in nucleic acid composition so as to maximize the effect of the composition as nucleotides supplementary additive. Meanwhile, the present inventor surprisingly found that, as compared to the products of the prior art, the nucleotide composition according to the present invention has specific components and proportions and could provide better effects.

**Summary**

The present invention provides a nucleotide composition for use in a method of promoting reparation of enterocytes after damage caused by oxidation, as defined in claim 1.

The nucleotide composition for use in a method of promoting reparation of enterocytes after damage caused by oxidation according to the invention consists of CMP, AMP, UMP and GMP, wherein on the weight basis, the proportions of the components are: CMP: 58-72%, AMP: 6-14%, UMP: 10-18% and GMP: 8-14%, provided that sum of the components is 100%, wherein the method involves administering the nucleotide composition to a subject.

In an embodiment, the nucleotide composition for the use according to the invention consists of CMP, AMP, UMP and GMP, wherein on the weight basis, the proportions of the components are: CMP: 60-70% AMP: 8-12%, UMP: 12-16% and GMP: 10-12%, provided that sum of the components is 100%.

In a further embodiment, the nucleotide composition for the use according to the invention consists of CMP, AMP, UMP and GMP, wherein on the weight basis, the proportions of the components are: CMP: 60-65%, AMP: 10-12%, UMP: 14-16% and GMP: 11-12%, provided that sum of the components is 100%.

In a further embodiment, the nucleotide composition for the use according to the invention consists of CMP, AMP, UMP and GMP, wherein on the weight basis, the proportions of the components are: CMP: 65-70%, AMP: 8-10%, UMP: 12-14% and GMP: 10-11%, provided that sum of the components is 100%.

In a preferable embodiment, the nucleotide composition for the use according to the invention consists of CMP, AMP, UMP and GMP, wherein on the weight basis, the proportions of the components are: CMP: 60%, AMP: 12%, UMP: 16% and GMP: 12%.

In a preferable embodiment, the nucleotide composition for the use according to the invention Inner Mongolia Yili Industrial Group Co., Ltd., et al. consists of CMP, AMP, UMP and GMP, wherein on the weight basis, the proportions of the components are: CMP: 65%, AMP: 10%, UMP: 14% and GMP: 11%.

In a preferable embodiment, the nucleotide composition for the use according to the invention consists of CMP, AMP, UMP and GMP, wherein on the weight basis, the proportions of the components are: CMP: 70%, AMP: 8%, UMP: 12% and GMP: 10%.

The present invention also provides a food for use in a method of promoting reparation of enterocytes after damage caused by oxidation, wherein the food is in the form of a liquid dairy product and comprises based on 100g liquid dairy product, energy 250kJ-355kJ, and the following ingredients: protein beyond lactoferrin 1.75g-4.26g, fat 1.75g-4.97g, vitamin A 42.5$\mu$g-191.7$\mu$g RE, vitamin D 0.625$\mu$g-2.6625$\mu$g, vitamin E$\geq$0.375mg $\alpha$-TE, vitamin K1$\geq$2.5$\mu$g, vitamin B1$\geq$27.5$\mu$g, vitamin B2$\geq$27.5$\mu$g, vitamin B6$\geq$27.5$\mu$g, vitamin B12$\geq$0.1$\mu$g, nicotinic acid or nicotinamide$\geq$275$\mu$g, folic acid$\geq$2.5$\mu$g, pantothenic acid$\geq$175$\mu$g, vitamin C$\geq$4.5mg, biotin$\geq$1$\mu$g, sodium$\leq$71mg, potassium 45mg-244.95mg, copper 175$\mu$g-124.25$\mu$g, magnesium $\geq$3.5mg, iron 0.625mg-1.775mg, zinc 0.25mg-1.065mg, calcium $\geq$42.5mg, phosphorus $\geq$20.75mg, iodine $\geq$3.5$\mu$g, chlorine $\leq$184.6mg, lactoferrin 5-13mg and carbohydrates;
wherein the nucleotide composition of the present invention is present in an amount of 2.64-7.66mg and the amount of carbohydrates is such that the energy provided by carbohydrates, protein and fat is 250kJ-355kJ; and
wherein the method involves administering the food to a subject.

Also described below (but not forming part of the present invention) is a process for preparing a food, comprising adding the nucleotide composition into the raw material of the food. The food can be an infant food. The food can be in the form of dairy product, for example the form of milk powder or liquid dairy product, such as the milk powder or liquid dairy product useful for infant.

Also described hereinbelow (but not forming part of the present invention) is use of the nucleotide composition for the manufacture of food. The food can be an infant food. The food can be in the form of dairy product, for example the form of milk powder or liquid dairy product, such as the milk powder or liquid dairy product useful for infant. The food can be used to provide the effect of immunostimulation. The food can be used to promote growth and development (such as, gastrointestinal tract development) of intestinal tract after damage. The food can be used to promote growth of intestinal beneficial microorganisms.

Also described below (but not forming part of the present invention) is a method for enhancing immunity in a subject, promoting growth and development (such as, gastrointestinal tract development) and/or promoting growth of intestinal beneficial microorganisms in a subject and/or any combination thereof, comprising administering the subject the nucleotide composition or food.

In a preferable embodiment, the subject is human, preferably human infant.

**Figures**

Figure 1    shows the results of cell survival rate experiment.
Figure 2    shows the results of SOD activity experiment.
Figure 3    shows the results of LDH activity experiment.
Figure 4    shows the results of MDA content experiment.
Figure 5    shows the results of cell proliferative experiment.

**Detailed description**

Unless specifically defined otherwise, all the technical and scientific terms used herein have the same meanings as those commonly used for a person skilled in the relevant field. Unless specifically defined otherwise, the ratios, proportions (including percentages) used herein are calculated on weight basis.

Nucleotide

The term "nucleotide" used herein refers to the compound formed from purine or pyrimidine base, ribose or ribodesose and phosphate group. For example, according to the sugar group, nucleotides can be categorized as ribonucleotide and deoxyribonucleotide. For example, according to the base group, nucleotides can be categorized as adenine nucleotide, guanine nucleotide, cytosine nucleotide, uracil nucleotide, thymine nucleotide and hypoxanthine nucleotide. When there is one phosphate group in nucleotide molecule, it is called monophosphate nucleotide (NMP).

The phosphate group of 5'-nucleotide may be further phosphorylated to be diphosphate nucleotide (NDP) and triphosphate nucleotide (NTP).

The term "nucleotide" used herein also encompasses cytosine (C), uracil (U), adenine (A), guanine (G) and/or hypoxanthine (I) present in the nucleotide composition for the use according to the invention in various forms, for example ribonucleoside, ribonucleotide, RNA phosphate and derivatives or precursors in any other forms, provided that they can be transferred or metabolized into their corresponding nucleotide forms *in vivo* or *in vitro*.

For example, in the field of food addition, the nucleotides used are mainly CMP (cytosine nucleotide), UMP (uracil nucleotide), AMP (adenine nucleotide), GMP (guanine nucleotide) or IMP (hypoxanthine nucleotide). For example, the commercially available 5'-mixed nucleotides comprise 5'-adenosine monophosphate (AMP), 5'-cytidine monophosphate (CMP), 5'-guanosine monophosphate (GMP), 5'-uridine monophosphate (UMP) and 5'-inosine monophosphate (IMP). Generally, when they are used in combination, the 5'-mixed nucleotides may for example be present in two types: one type is that 5'- adenosine monophosphate and 5'-cytidine monophosphate are in the forms of free acid while other three nucleotides are in the forms of sodium salt, i.e. two acid and three sodium type; the other is that all the nucleotides are in the form of sodium salt, i.e. five sodium type. Accordingly, the term "nucleotide" used herein encompasses its salt form, for example alkaline metal salts or alkaline earth metal salts, such as sodium salt, potassium salt, calcium salt, e.g. monosodium salt, disodium salt, such as $CMPNa_2$, $AMPNa_2$, $UMPNa_2$, $GMPNa_2$, $IMPNa_2$ and $CMPK_2$, $AMPK_2$, $UMPK_2$, $GMPK$, $IMPK_2$. It will be understood by a person skilled in the art, the components in the nucleotide composition for the use according to the invention can be present each optionally and independently in the forms of various salts, comprising for example the above-mentioned "two acid and three sodium type"; or the components and the salts thereof can be present in any combination, for example only GMP is in the form of salt or only CMP is in the form of salt. Optionally, all the components in the nucleotide composition for the use according to the invention can be present in the form of salt, comprising for example the above-mentioned "five sodium type".

Likewise, the term "nucleotide" used herein comprises the solvate thereof in various forms (such as hydrate). Accordingly, when the nucleotide composition for the use according to the invention comprises other forms such as those listed above of the nucleotide components, the proportions of such forms in the composition shall be calculated according to their corresponding nucleotide molecules. For example, when CMP is present in the form of disodium salt ($CMPNa_2$), the weight ratio shall be calculated after being transferred into CMP.

Nucleotide composition

The nucleotide composition for the use according to the invention consists of the following components: CMP, AMP, UMP and GMP and the weight proportions of the components are CMP: 58-72%, AMP: 6-14%, UMP: 10-18% and GMP: 8-14%, provided that sum of the components is 100%.

In an embodiment, in the nucleotide composition for the use according to the invention, CMP is present in an amount of preferably 60-70% by weight, for example 60-65% by weight and 65-70% by weight. It will be understood that the ranges comprise all the point values therein, for example 59%, 60%, 61%, 62%, 63%, 64%, 65%, 66%, 67%, 68%, 69%, 70% or 71%; as well as various subranges formed by such point values, for example 60-63%, 60-68% or 63-70%. In a specific embodiment, in the nucleotide composition for the use according to the invention, CMP is present in an amount of 60%, 65% or 70% by weight.

In an embodiment, in the nucleotide composition for the use according to the invention, AMP is present in an amount of preferably 8-12% by weight, for example 8-10% by weight and 10-12% by weight. It will be understood that the ranges comprise all the point values therein, for example 7%, 8%, 9%, 10%, 11%, 12% or 13%; as well as various subranges formed by such point values, for example 8-9%, 8-11% or 9-12%. In a specific embodiment, in the nucleotide composition for the use according to the invention, AMP is present in an amount of 8%, 10% or 12% by weight.

In an embodiment, in the nucleotide composition for the use according to the invention, UMP is present in an amount of preferably 12-16% by weight, for example 12-14% by weight and 14-16% by weight. It will be understood that the ranges comprise all the point values therein, for example 11%, 12%, 13%, 14%, 15%, 16% or 17%; as well as various subranges formed by such point values, for example 12-15% or 14-15%. In a specific embodiment, in the nucleotide composition for the use according to the invention, UMP is present in an amount of 12%, 14% or 16% by weight.

In an embodiment, in the nucleotide composition for the use according to the invention, GMP is present in an amount of preferably 10-12% by weight, for example 10-11% by weight and 11-12% by weight. It will be understood that the ranges comprise all the point values therein, for example 9%, 10%, 11%, 12% or 13%; as well as various subranges formed by such point values, for example 8-11% or 10-14%. In a specific embodiment, in the nucleotide composition for the use according to the invention, GMP is present in an amount of 10%, 11% or 12% by weight.

The nucleotide composition for the use according to the invention does not comprise IMP.

It will be understood by a person skilled in the art that, the ranges and specific values listed above for various components can be optionally combined and selected, provided that sum of the selected components is 100%. For example, in the nucleotide composition for the use according to the invention, when the content of CMP is 60-70%, such as 60-65% or 65-70%, the content of AMP can be 8-12%, such as 8-10% or 10-12%. Likewise, when the contents of CMP and AMP are within any above ranges, the content of UMP can be 12-16%, such as 12-14% or 14-16%. Similarly, when the contents of CMP, AMP and UMP are within any above ranges, the content of GMP can be 10-12%, such as 10-11% or 11-12%. According to the same principle, when the contents of CMP, AMP, UMP and GMP are within any above ranges, the content of IMP is 0% (i.e. the nucleotide composition for the use according to the invention does not comprise IMP). A person skilled in the art will understand that the above selections shall comply with the requirement that sum of the selected components is 100%. The expression "substantially consist of' means in addition to the defined nucleotide Inner Mongolia Yili Industrial Group Co., Ltd., et al. components, if necessary, the nucleotide composition can optionally comprise food or physiologically acceptable carrier, excipient or adjuvant, for example preservative, antioxidant, binder, thickener or diluent and various impurities which possibly exist. The carrier, excipient or adjuvant and impurities are inert for the active ingredients in the composition (nucleotide components) and their presence or amount would not disturb or significantly disturb the functions of the active ingredients. Moreover, when calculating the proportions of the nucleotide components in the nucleotide composition, the carrier, excipient or adjuvant and impurities which are optionally present will not be considered. In addition, a person skilled in the art will understand that the expression "substantially consist of ..." encompasses the meaning of "consist of ...".

The term "optional" or "optionally" used herein refers a subject matter which may or may not exist. For example, "optionally comprising food or physiologically acceptable carrier, excipient or adjuvant" means the nucleotide composition may or may not comprise such carrier, excipient or adjuvant. Food

The term "food" used herein has the common meaning to a person skilled in the art and for example refers to edible or drinkable material for human, including the food which is processed, semi-processed or unprocessed.

The term "infant food" used herein refers to the food, except breast milk, suitable for infant, which is added with various ingredients due to the requirement of infant's growth and development, for example nucleotides, fatty acids, vitamins, carbohydrates, vegetable oils or microelements, such as the nucleotide composition for the use according to the invention. Examples of the food are dairy product (e.g. milk powder and liquid dairy product), puree or rice flour. The infant food can be in the form of dairy product, for example milk powder or liquid dairy product, such as infant milk powder or liquid dairy product added with the nucleotide composition.

The term "infant" used herein generally refers to human subject of 0~3 years. Application of the nucleotide composition for the use according to the invention for example refers to this year range. If necessary, the nucleotide composition for the use according to the invention or the food containing the same may be administered to older human subject, for example 4, 5, 6, 7, 8, 9, 10 or older.

Also described is a process for preparing a food, comprising adding the nucleotide composition for the use according to the invention into the food. The food can be an infant Inner Mongolia Yili Industrial Group Co., Ltd., et al. food. According to the invention as defined in claim 6, the food is in the form of liquid dairy product, such as the liquid dairy product for infant.

Throughout the description, the terms "liquid dairy product" and "liquid milk" have the same meaning and are interchangeably used, referring to dairy product in liquid form and comprising various nutrient ingredient and energy useful for human, such as those listed below.

When preparing the milk powder, the nucleotide composition is used in an amount of 0.2~0.58 weight portion (based on 1000 weight portion of milk powder). For example, the milk powder, based on 1000 weight portion of the milk powder, comprise: skimmed milk powder 120~160 weight portion, lactose 240~280 weight portion, desalted whey powder 180~210 weight portion, whey protein powder (WPC34%) 90~120 weight portion, sunflower seed oil 155~180 weight portion, corn oil 35~55 weight portion, soybean oil 40~60 weight portion, nucleotide composition 0.35~0.5 weight portion, soyabean lecithin 1~2.5 weight portion, bifidobacteria 0.1~0.15 weight portion, oligofructose powder 4~5 weight portion, galactooligosaccharide syrup 10~12 weight portion, nutriologically acceptable amount of vitamins and nutriologically acceptable amount of microelement.

The main process for preparing the milk powder mainly comprise: dosing, preheating, homogenizing, concentrating and sterilizing, spray-drying, dry-mixing and obtaining the final product, wherein the nucleotide composition for the use according to the invention is added together with DHA, ARA and bifidobacteria into milk powder after spray-drying, which are then mixed.

The food for use according to the present invention is in the form of a liquid dairy product and comprises based on 100g liquid dairy product, energy 250kJ-355kJ, and the following ingredients: protein beyond lactoferrin 1.75g-4.26g, fat 1.75g-4.97g, vitamin A 42.5μg-191.7μg RE, vitamin D 0.625μg-2.6625μg, vitamin E≥0.375mg α-TE, vitamin K1≥2.5μg, vitamin B1≥27.5μg, vitamin B2≥27.5μg, vitamin B6≥27.5μg, vitamin B12≥0.1μg, nicotinic acid or nicotinamide≥275μg, folic acid≥2.5μg, pantothenic acid≥175μg, vitamin C≥4.5mg, biotin≥1μg, sodium≤71mg, potassium 45mg-244.95mg, copper 17.5μg-124.25μg, magnesium≥3.5mg, iron 0.625mg-1.775mg, zinc 0.25mg-1.065mg, calcium≥42.5mg, phosphorus≥20.75mg, iodine≥3.5μg, chlorine ≤184.6mg, lactoferrin 5-13mg and carbohydrates; wherein the nucleotide composition according to the invention is present in an amount of 2.64-7.66mg and the amount of carbohydrates is such that the energy provided by carbohydrates, protein and fat is 250kJ-355kJ.

The fat used is provided by one or more of anhydrous milk fat, soybean oil, corn oil, sunflower seed in any ratio and combination. In addition, to improve the properties of liquid milk system like stability, some food acceptable additive for example emulsion stabilizer can be added. Preferably, the food additive and the amount thereof herein comprise for example one or more of carrageenan 0.005wt%~0.05wt%, glycerin monostearate 0.01wt%~1wt%, guar gum 0.01wt%~0.1wt%, locust bean gum 0.01wt%~0.1wt% or any combination thereof.

Finally, described (but not forming part of the present invention) is use of the nucleotide composition for the manufacture of food. In an embodiment, the food is an infant food. The food can be in the form of dairy product, for example the form of milk powder or liquid dairy product, such as the milk powder or liquid dairy product useful for infant.

Immunostimulation (not according to the present invention)

The nucleotide composition and the food containing the same can provide the effect of immunostimulation after consumption. The effect of "immunostimulation" herein refers to the function of enhance the immunity in a subject, for example in the aspects of improving transformation function of lymphocytes, enhancing phagocytosis function of macrophagocytes, enhancing NK cells activity, improving immune response and antibody production, such those provided in the Examples of the description.

Promotion of growth and development and promotion of reparation of intestinal tract after damage

The nucleotide composition and food for the use according to the invention can promote reparation of enterocytes after damage caused by oxidation. The inventor, from the experiment *in vitro* found that the nucleotide composition for the use according to the invention can promote growth of enterocyte, promote proliferation of enterocyte, and protect enterocyte and hepatocyte from damage. Such damage is oxidative damage, such as that cause by reactive oxygen species. In a preferable embodiment, the subject is human and preferably human infant.

Promotion of growth of intestinal beneficial microorganisms (not according to the present invention)

The nucleotide composition and the food containing the same can promote growth of intestinal beneficial microorganisms (e.g. bifidobacteria and lactobacillus) in a subject after consumption, for example in the aspects of being beneficial for growth of bifidobacteria, increase of contents of bifidobacteria and lactobacillus in intestinal tract and faeces (such bacterial flora can inhibit reproduction of acid-abominating pathogenic bacteria and E. coli.), reduction of proportion of intestinal tract harmful bacteria, thereby benefiting the health of the subject. The present inventor found that, addition of the composition into for example intestinal tract condition *in vitro,* by observing the multiplication amount of probiotics and lactobacillus in the environment, especially that of bifidobacteria, nucleotide composition show significant growth promotion to intestinal beneficial microorganisms.

**Example**

In the Examples, the test samples have the components and proportions as follows (on the weight basis):

Nucleotide composition for use according to the invention:

> Sample 1: CMP: 60%, AMP: 12%, UMP: 16% and GMP: 12%
> Sample 2: CMP: 65%, AMP: 10%, UMP: 14% and GMP: 11%
> Sample 3: CMP: 70%, AMP: 8%, UMP: 12% and GMP: 10%

Nucleotide composition of the prior art:

> Comparative Sample 1: CMP: 33.7%, AMP: 20.3%, UMP: 23.1%, GMP: 7.6% and IMP 15.3%
> Comparative Sample 2: CMP: 60%, AMP: 14.5%, UMP: 18.2% and GMP: 7.3%
> Comparative Sample 3: CMP: 42.7%, AMP: 13.4%, UMP: 24.2% and GMP: 19.7%

Reference Example 1: immunostimulation effect (I)

The purpose of this reference example is to test the effect of immunostimulation of the nucleotide composition and the principle and steps are based on the requirements and specification of "technical standards of examination and evaluation for healthcare food (2003)", Second part "functional test method" Chapter I.

1. Materials and methods

1.1. Main reagents

Main reagents used in this example: RPMI-1640 medium (Gibco); fetal calf serum (Gibco); Concanavalin A (ConA) (Sigma); Lymphocyte Separation liquid, whole blood and tissue diluent, cell wash solution (Tian Jin Hao Yang Biological Manufacture CO., LTD); 5% chicken red blood cell suspension (prepared by the lab); MTT kit, Hank's solution (Beyotime Institute of Biotechnology); Giemsa dye liquor (Zhuhai BASO Biotech CO., LTD); EDTA anticoagulant tube (BD); 96-well cell culture plate (Corning); Baicheng colostrum capsule (Shanghai Fuzheng Biotech CO., LTD); nucleotide samples (Nanjing Tongkaizhaoye Biotech CO., LTD).

1.2. Main instruments

$CO_2$ incubator (Sanyo MCO-18AIC(UV)); clean bench (AIRTECH); inverted microscope (OLYMPUS); Hitachi horizontal centrifuge (himac-CT6EL); microplate reader (BIO-RAD Model 680); OLYMPUS microscope (BX51); DNP thermostatic incubator (Shanghai Jinghong Lab instrument CO., LTD).

1.3.Animals

160 KM male mice of 5~6 weeks, provided by Shanghai SLAC Laboratory Animal Co., Ltd.

1.4. Animals grouping

The KM mice were adapted for 7 days and then randomly divided into 8 groups, 20 animals each group: blank control group, positive control group, high, medium and low dosage groups of Sample 1 and high, medium and low dosage groups of Comparative Sample 1. The animals in each groups received gavage of sterile water dissolved with each sample (below) and the blank control group received gavage of sterile water at the same volume, one administration per day, for 30 days.

The high dosage group received a dose of 67.37 mg·kg$^{-1}$·d$^{-1}$, the medium dosage group received a dose of 41.82 mg·kg$^{-1}$·d$^{-1}$, the low dosage group received a dose of 23.23 mg·kg$^{-1}$·d$^{-1}$ and the positive control group received a dose of 150.17 mg·kg$^{-1}$·d$^{-1}$.

The positive control group: colostrum capsule.

Test group: Sample 1 is nucleotide composition for the use according the invention. Comparative Sample 1 is nucleotide composition which was prepared according to nucleotide components and proportions of a commercially available infant food added with nucleotides.

1.5. Assay

Lymphocyte transformation assay:

At 38$^{th}$ day, 10 mice were randomly taken from each group. Blood was taken by removal of eyeball with 2mL EDTA anticoagulant tube and lymphocytes were separated under sterilization with Ficoll density gradient centrifugation. 1 mL anti-coagulate fresh blood was mixed uniformly with whole blood and tissue diluent at 1:1, which was carefully added to the liquid surface of lymphocyte separation liquid at the same volume. After centrifugation at 1500 rpm for 15 min with horizontal centrifuge, cyclic milk-white lymphocyte layer was collected, which was then washed twice with cell wash solution. RPMI-1640 full liquid medium was used to prepare a concentration of $1 \times 10^7$/mL, which was added into 96-well cell culture plate, 100 μL each well and 6 wells per mice, wherein 3 wells were added with ConA (final concentration 5μg/mL) and other 3 wells without addition as control. After 68 h incubation in $CO_2$ incubator at 5%$CO_2$ and 37°C, MTT (5mg/mL) solution (10 μL/well) was added, after a further incubation for 4 h, 100 μL Formazan solution was added to each well, followed by further incubation in $CO_2$ incubator at 37°C until full dissolution of Formazan. OD value at 570 nm was determined in microplate reader and Stimulation Index (SI) was calculated: SI = ConA stimulation tube OD average/control tube OD average.

Enterocoelia macrophage phagocytosis assay:

At 38th day, 10 mice were randomly taken from each group. Each mouse was injected 1 mL of 5% chicken red blood cell suspension at abdominal cavity. After 30 min, the animal was killed by cervical dislocation. To abdominal cavity was injected 1 mL normal saline and the abdomen was rubbed gently for 1 min. The skin of abdominal wall was cut with the open slot at muscular layer. A tubularis was used to suck 1 mL of peritoneal fluid from abdominal cavity, which was placed dropwise on a clean slide. The slide was placed in an enamel box with wet gauze pad and then incubated in 37°C incubator for 30 min. The slide was taken out and washed to remove supernatant and cells which were not attached to the slide and dried in the air under room temperature. After fixation with 1:1 acetone/methanol solution, the slide was placed in Giemsa dye solution for 15~30 min and then washed and dried in the air. Macrophages were counted under high magnification, and 100 cells were counted per slide to calculate phagocytosis percentage and phagocytosis index.

$$\text{Phagocytosis percentage (\%)} = (\text{number of macrophages taking chicken red blood cells} / \text{number of counted macrophages}) \times 100$$

$$\text{Phagocytosis index} = (\text{total number of chicken red blood cells which have been taken} / \text{number of counted macrophages})$$

1.6. Statistical analysis

Data was shown as $\bar{x} \pm s$, variance analysis was performed with SPSS 13.0 statistical software, pairwise comparison was performed with SNK method, and test level is $\alpha = 0.05$.

2. Results

2.1. Influence of samples on lymphocyte proliferation

Table 1: Influence of samples on mice lymphocyte proliferation ($\bar{x} \pm s$, n=10)

| Group | Stimulation index (SI) |
| --- | --- |
| Blank control group | $1.24 \pm 0.19$ |
| Positive control group | $2.13 \pm 0.47$* |
| Sample 1 high dosage group | $2.09 \pm 0.23$* |
| Sample 1 medium dosage group | $1.87 \pm 0.26$* |
| Sample 1 low dosage group | $1.46 \pm 0.34$* |
| Comparative Sample 1 high dosage group | $1.51 \pm 0.18$* |
| Comparative Sample 1 medium dosage group | $1.30 \pm 0.22$ |
| Comparative Sample 1 low dosage group | $1.27 \pm 0.15$ |
| Note: * significant as compared to blank control group (p<0.05) | |

According to table 1, SI values of high, medium and low dosage groups of Sample 1 were significantly higher than that of blank control group (p<0.05) and showed dose dependence. SI value of high dosage group of Comparative Sample 1 is significantly higher than that of blank control group (p<0.05), SI values of medium and low dosage groups of Comparative Sample 1 were not significantly distinguished from those of blank control group (p>0.05). SI value of low dosage group of Sample 1 is significantly higher than that of medium dosage group of Comparative Sample 1 (p<0.05).
The results showed that the use of the nucleotide composition can significantly enhance mice lymphocyte proliferation and showed a better effect over comparative sample.

2.2. Influence of samples on macrophages phagocytosis

Table 2: Influence of samples on mice macrophage phagocytosis ($\bar{x}\pm$s, n=10)

| Grouping | Phagocytosis percentage (%) | Phagocytosis index |
|---|---|---|
| Blank control group | 35.2±4.2 | 0.43±0.06 |
| Positive control group | 52.7±8.6* | 0.62±0.10* |
| Sample 1 high dosage group | 50.1±2.5* | 0.59±0.01* |
| Sample 1 medium dosage group | 48.7±3.2* | 0.57±0.13* |
| Sample 1 low dosage group | 46.7±3.1* | 0.53±0.07* |
| Comparative Sample 1 high dosage group | 49.8±2.0* | 0.50±0.22* |
| Comparative Sample 1 medium dosage group | 34.9±1.7 | 0.44±0.12 |
| Comparative Sample 1 low dosage group | 35.1±3.9 | 0.42±0.19 |
| Note: * significant as compared to blank control group (p<0.05) | | |

According to table 2, phagocytosis percentage and phagocytosis index of high, medium and low groups of Sample 1 are significantly higher than those of blank control group (p<0.05). Phagocytosis percentage and phagocytosis index of high dosage group of Comparative Sample 1 are significantly higher than those of blank control group (p<0.05). Phagocytosis percentage and phagocytosis index of medium and low dosage groups of Comparative Sample 1 are not significantly distinguished from those of blank control group (p>0.05). Phagocytosis percentage and phagocytosis index of low dosage group of Sample 1 are significantly higher than those of medium dosage group of Comparative Sample 1 (p<0.05).

The results showed that the use of the nucleotide composition can significantly enhance mice enterocoelia macrophage phagocytosis function and showed a better effect over comparative sample.

3. Conclusion

According to the experiment results, the nucleotide composition can significantly improve lymphocytes transformation function, enhance enterocoelia macrophage phagocytosis function, whereby showing the effect of enhance immunity function and such immunoregulation effect is significantly better than comparative sample.

In another aspect, more potent immunoregulation effect means the same or similar effect can be achieved with less dosage, which shows a significant advantage with respect to cost in large scale industrial production.

On this basis, the above experiments are repeated, wherein Sample 1 were replaced with Sample 2 and Sample 3. As for Sample 2 and Sample 3, the results similar as Sample 1 were obtained.

Reference Example 2: Immunostimulation effect (II)

The purpose of this example is to test the effect of immunostimulation of the nucleotide composition and the principle and steps are based on the requirements and specification of "technical standards of examination and evaluation for healthcare food (2003)", Second part "functional test method" Chapter I.

1. Materials and methods

1.1. Main instruments

high speed refrigerated centrifuge (SIGMA 3-30K), shaker (Vortex4 digital), pipettor (eppendorf, Germany), Whole blood cell analyzer (Urit, U-2900PLUS), $CO_2$ incubator (Thermo 311), microplate reader (Biotek H4), spectrophotometer (Shanghai JingKe 722s), clean bench (Shangyu Xingxing Instrument CO., LTD SW-CJ-2D), autoclave sterilizer (Sanyo Japan MLS-3781-PC 75L), cryogenic refrigerator (Hangzhou Aipu Instrument CO., LTD DW-40L058), inverted microscope (Nikon Japan Eclipse Ti-S), vernier caliper (Standard Gage, US), electronic scales (Sartorius BSA124S-CW), Toe Volume Meter (Jinan Yiyan Science Development CO., LTD YLS-7C), Hemolytic plaque automatic image analyzer (Beijing Antai Yongxin Medical Technology CO., LTD AT-Spot 5100), flow cytometry (BD, US FACSCalibur).

1.2 Main reagents

cyclophosphamide (Jiangsu Hengrui Medicine CO., LTD), Dipotassium ethylene diamine tetraacetate (Beijing Reagent factory), RpMI1640 liquid cell medium (Shanghai Yuanlong Biology Technology Company), bovine calf serum, 2-mercaptoethanol, penicillin, streptomycin, ConA solution (Beijing Mengyimei Biology Technology CO., LTD), sterile Hank's solution, BrdUp marker solution (Beijing Mengyimei Biology Technology CO., LTD), dinitrofluorobenzene (Beijing Qingshengda Chemical Engineering Technology CO., LTD), barium sulfide, sheep red blood cell (SRBC), guinea pig serum, Indian ink (Shanghai Yuanmu Biotechnology CO., LTD), YAC-1 cell (Shanghai Enzyme Research Biotechnology CO., LTD), Tris-HCL buffer (Beijing Mengyimei Biology Technology CO., LTD).

1.3 Animals

770 healthy male BALB/c mice of 3-4 years and weight of 11-13g were provided by Beijing Huafukang Bioscience CO., LTD and were accommodated in level 2 Animal house of Chinese Academy of Medical Science, Union Institute of Materia Medica: room temperature ($25\pm2°C$), relative humidity ($55\pm2$)%, 12h/12h illumination, free access to food and water, 4-5 animals per cage. The test was initiated after adaption for 3 days.

770 animals were fed in 5 big immune groups, 154 in each big group, which was randomly divided into 11 groups (high and low dosage for 5 nucleotide samples, 10 groups in total and one group as control group), 14 in each group. Immune group 1: delayed type hypersensitivity; Immune group 2: mice lymphocyte transformation assay, NK cell activity assay, ratio of the organs to body; Immune group 3: half value of hemolysis, antibody producing cell number; Immune group 4: carbon clearance test; Immune group 5: mice abdominal cavity macrophage taking fluorescent microsphere assay. Each sample was administered by gavage for 28 days, once per day, with the gavage volume as 0.2 mL/10g. Control group received distilled water by gavage. After administration, the mice were killed and determined for various immune indicators.

1.4 Test samples

Samples 1-3 were nucleotide composition for the use according to the invention. Comparative Samples 2 and 3 were other two nucleotide compositions disclosed in the prior art. Each sample was set with low and high dosage groups as 120.7 mg/kg and 1207.0 mg/kg, respectively.

1.5 Test items and indicator

1.5.1 Organs/body weight ratio: The mice were weighed initially and at 28th day after administration as initial weight and final weight. The mice were killed by dislocation and spleen and thymus were taken and removed off fascia. The bloodiness on the surface was sucked by filter paper and the organs were weighed to calculate spleen/body weight ratio and thymus/body weight ratio.

1.5.2 Delayed type hypersensitivity(toe thickening, DTH): After successive administration for 28 days, each mouse was injected in abdominal cavity 2% packed-cell volume of SRBC (v/v, formulated in normal saline) SRBC 0.2 mL. Four days after sensitization, the thickness of left rear foot plantar was measured and average value was calculated according to 3 measurements at the same site. At the measuring site, 20 $\mu$L of 20% SRBC was injected subcutaneously. 24 h after injection, the thickness of left rear foot plantar was measured and average value was calculated according to 3 measurements. The difference in thickness before and after the challenge (swelling degree of toe) was used to present DTH degree.

1.5.3 Mice lymphocytes transformation induced by ConA (MTT method): After successive administration for 28 days, the mice were killed. After sterilization in 75% alcohol in beaker, the spleen was taken under sterile condition and placed in a dish with four layers of 3 cm×3 cm gauze (autoclaved), to which was added appropriate amount of Hank's solution. The spleen was packaged with gauze and ground with elbow forceps to prepare single cell suspension, which was washed twice with Hank's solution and centrifuged at 1000 rpm for 10 min. The cells were suspended in 2 mL full liquid medium and viable cells were counted to adjust the cell concentration to be $5\times10^6$/mL. The cell suspensions were added into 24 well culture plate in duplicated wells, 1 mL in each well. 75 $\mu$L of ConA solution (corresponding to 7.5 $\mu$g/mL) was added into one well and the other well was used as control. The cells were incubated at 5% $CO_2$, 37°C for 72 h. 4 h prior to end of incubation, 0.7 mL supernatant was sucked gently from each well and then 0.7 mL of RPMI 1640 liquid culture medium free of bovine calf serum was added. At the same time, MTT (5 mg/mL) 50 $\mu$L/well was added and incubation was continued for 4 h. After incubation, 1 mL acidic isopropanol was added to each well with beating for homogeneity such that purple crystal was dissolved completely. The system was split into 96 well culture plate, each well having 3 parallel wells. Optical density value at 570 nm was determined with enzyme linked immunosorbent detector. Proliferation capacity of lymphocyte was expressed as optical density value of well with ConA subtract that of the well without ConA.

1.5.4 Antibody producing cell assay: After successive administration for 28 days, sheep blood was washed three times with normal saline and each mouse was injected in abdominal cavity 2% packed-cell volume (v/v, formulated in normal saline) of SRBC 0.2 mL for immunization. Four days after immunization with SRBC, the mice were killed and spleen was taken to prepare a cell suspension of $5\times10^6$ cells/mL. Agarose was heated for dissolution and mixed with double amounts of Hank's solution, which was then split into tube, 0.5 mL in each tube. Into the tube was added 20% packed-cell volume (v/v, formulated in normal saline) of SRBC 50 $\mu$L, spleen cell suspension 200 $\mu$L. After quick mixing, the mixture was poured on 6 well plate coated with agarose thin layer. After solidification of the agar, the plate was placed in $CO_2$ incubator for 1h, then complement diluted with SA buffer (1:10) was added and incubation was performed for 2 h. Number of hemolytic plaque was counted.

1.5.5 Serum hemolysin half value of hemolysis ($HC_{50}$): After successive administration for 28 days, sheep blood was washed three times with normal saline and each mouse was injected in abdominal cavity 2% packed-cell volume (v/v, formulated in normal saline) of SRBC 0.2 mL for immunization. After four days, blood was taken by removal of eyeball into 1.5 mL centrifuge tube, which was placed at 4°C for 1 h to allow sufficient separation of serum. The tube was centrifuged at 2000rpm for 10 min and serum was collected. The serum was diluted 100 folds with SA buffer. The diluted serum was added into 96 well plate, 100 $\mu$L in each well, to which was successively added 10%(v/v) SRBC 50 $\mu$L, complement 100 $\mu$L diluted with SA buffer (1:8). The place was incubated in 37°C thermostatic water bath for 30min and then centrifuged at 1500 rpm for 10 min. 50 $\mu$L of supernatants from sample wells and blank control well were added into another 96 well plate, to which was added 150 $\mu$L of VanKampen-Zijlstra's reagent. At the same time, half hemolysis well was set, to which was added 10%(v/v)SRBC 12.5 $\mu$L and then VanKampen-Zijlstra's reagent to 200 $\mu$L. The mixture was mixed homogenously with a shaker and allowed to stand for 10 min. Optical density values of each wells at 540 nm were determined with Automatic microplate reader.

The amount of hemolysin is shown as half value of hemolysis ($HC_{50}$) and calculated as:

$$\text{Sample } HC_{50} = (\text{sample optical density value/ optical density value upon half hemolysis of SRBC}) \times \text{dilution ratio}$$

1.5.6 Mice abdominal cavity macrophage taking fluorescent microsphere assay: After successive administration for 28 days, four days before end of gavage, each mice was injected 0.2 mL of 2% SRBC to activate macrophage. On the day of test, mice were killed with dislocation of the cervical spine, of which the abdominal cavity was injected Hank's solution added with bovine calf serum, 3mL/animal. The abdomen was kneaded softly for 20 times to wash macrophages from abdominal cavity sufficiently. The abdominal wall was cut with a small open slot, and 2 mL of abdominal washing liquid was sucked and filtered into tube with 75 $\mu$m filter. Macrophages number was adjusted to $4\sim6\times10^5$/mL. A pipettor was used to transfer 1 mL abdominal washing liquid into 6 well culture well, to which was added preconditioned fluorescent microspheres ($1\times10^7$/plate). The plate was incubated in $CO_2$ incubator at 37°C in dark for 120 min. After incubation, the supernatant (containing cell which were not adherent and excess fluorescent microspheres) was discarded. 1.0 mL of PBS buffer was used to wash gently for two times. After removal of supernatant, 0.3 mL PBS buffer at 4°C was added. The adherent cells were scraped with cell scraper and filtered with 75 $\mu$m filter after gentle beating. The cells were ready for analysis.

The results were calculated as

$$\text{phagocytosis percentage (\%)} = (\text{number of macrophages taking fluorescent microspheres / counted number of macrophages}) \times 100$$

$$\text{phagocytosis index} = (\text{total number of fluorescent microsphere which have been taken / counted number of macrophages})$$

1.5.7 NK cell activity assay (lactic dehydrogenase (LDH) method):

After successive administration for 28 days, 24 h before test, the target cells YAC-1 were subjected to passage culture. Before use, the cells were washed twice with Hank's solution and adjusted to the concentration of $1\times10^5$/mL (target cell) with RPMI 1640 full liquid medium containing 10% bovine calf serum. The mice were killed by cervical dislocation and spleen was taken under sterile condition to prepare spleen cell suspension, which was washed twice with Hank's solution, centrifuged at 1000 rpm for 10 min and resuspended with 2 mL of RPMI 1640 full liquid medium containing 10% bovine calf serum. Trypan blue was used to perform viable cells dyeing counting (viable cells should be over 95%) and the cell concentration was adjusted to $1\times10^7$/mL (effector cell) such that the ratio of effector cells to target cells was 100:1. 100 $\mu$L of target cells and effector cells were respectively added into U shape 96 well culture plate. The target natural releasing well was added with target cells and liquid medium 100$\mu$L, respectively and the target maximum releasing well was added with target cells and 1% NP40 100μL, respectively. These wells were set with three parallel wells and incubated in 5% $CO_2$ incubator at 37°C for 4 h. 96 well culture plate was centrifuged at 1500 rpm for 5 min, 100 μL of supernatant was sucked from each well and placed in flat 96 well culture plate, to which was added 100 μL of LDH base solution. The reaction was performed for 3 min and to each well was added 30 μL of 1 mol/L HCl solution to quench the reaction. OD value at 490 nm was determined with microplate reader and NK activity was calculated according to the following formula.

NK cell activity % = (reaction well OD – natural releasing well OD) / (maximum releasing well OD - natural releasing well OD) × 100%

1.5.8 Carbon clearance assay: The animals were successively administered for 28 days and weighed. Indian ink was injected through tail vein. 2, 10 min after ink injection, 20 μl of blood was taken and added into 2 ml of 0.1% sodium carbonate solution and OD value at 600 nm was determined. The mice were killed and liver and spleen were taken, and the bloodiness on the surface was sucked by filter paper and the organs were weighed.

Phagocytosis index was used to present the mice carbon clearance capacity and calculated according to the following formula:

$$ \kappa = \frac{LgOD\ 1 - LgOD\ 2}{t2 - t1} $$

$$ phagocytos\ is\ \ index = \frac{bodyweight}{liverweigh\ t + spleenweig\ ht} \times \sqrt[3]{\kappa} $$

1.6 Criteria: As for the four major aspects of cellular immunity, humoral immunity, monocyte-macrophage function and NK cell activity, if any two aspects had positive results, the sample should be considered as having the function of enhance immunity. In cellular immunity function assay items, if two test results were both positive, or two dosage group of any one test had positive result, the cellular immunity function assay had positive result. In humoral immunity function assay items, if two test results were both positive, or two dosage group of any one test had positive result, the humoral immunity function assay had positive result. In monocyte-macrophage function assay items, if two test results were both positive, or two dosage group of any one test had positive result, the monocyte-macrophage function assay had positive result. As for NK cell activity assay, if one or more dosage group had positive result, the NK cell activity assay had positive result.

2. Results:

After oral administration of test samples for 28 day, the immune function items measurements were as follows: Body weight and organs ratios were not significantly distinguished from normal groups.

The positive and negative results were shown in Table 3.

Table 3

| Grouping | cellular immunity | | humoral immunity | | Monocyte-macrophage function | | NK cell activity |
|---|---|---|---|---|---|---|---|
| | Spleen lymphocyte transformation assay | Delayed type hypersensitivity | Antibody producing cells | Half value of hemolysis HC50 | Carbon clearance assay | macrophage phagocytosis assay | |
| Sample 1 low dosage | positive | negative | positive | positive | positive | negative | positive |
| Sample 2 low dosage | negative | negative | negative | positive | positive | positive | positive |
| Sample 3 low dosage | negative | negative | negative | negative | negative | positive | negative |
| comparative Sample 2 low dosage | negative | negative | negative | negative | negative | negative | negative |
| comparative Sample 3 low dosage | negative | negative | negative | negative | negative | positive | positive |
| Sample 1 high dosage | positive | negative | positive | negative | positive | positive | positive |
| Sample 2 high dosage | negative | negative | negative | negative | positive | positive | positive |
| Sample 3 high dosage | negative | negative | negative | negative | positive | positive | positive |
| comparative Sample 2 high dosage | positive | negative | negative | negative | positive | negative | positive |
| comparative Sample 3 high dosage | positive | negative | negative | negative | positive | positive | positive |

EP 3 266 310 B1

13

According to the results in Table 3, from the criteria for the four major aspects (i.e. the four major aspects in section 1.6), Samples 1, 2, 3 and Comparative Sample 3 were considered as positive and thus had the immunostimulation effect. On the contrary, Comparative Sample 2 was not considered as positive.

On this basis, as for Samples 1-3 and Comparative Sample 3, from point of the above dosage groups (section 1.6), the nucleotide composition had more immunostimulation positive indicators, showing more potent and more comprehensive immunostimulation effect. For example, 1) Sample 1 had the cellular immunity effect, while other samples did not; 2) Sample 1 had humoral immunity effect, while other samples did not; 3) Sample 1 and 2 were positive for carbon clearance assay, while other samples were not; 4) Samples 2, 3 and Comparative Sample 3 had macrophage phagocytosis function, while other samples did not; 5) Sample 1, 2, 3 and Comparative Sample 3 were positive for NK cell activity.

From the above results, the nucleotide composition was effective in stimulation of immunity function and showed better effect over the compositions of the prior art. Likewise, as stated above in Example 1, more potent immunoregulation effect means the same or similar effect can be achieved with less dosage, which shows a significant advantage with respect to cost in large scale industrial production.

Example 3: Protection from damage and reparation of the nucleotide composition

The purpose of this example is to test the effect of the nucleotide composition for the use according to the invention in providing protection from damage and reparation.

1. Materials and methods

1.1 Instruments and reagents

RPMI-1640 medium and DMEM high sugar medium were purchased from Gibco. 5'-AMP (A1752), 5'-CMP-Na$_2$ (C1006), 5'-GMP-Na$_2$ (G8377), 5'-UMP-Na$_2$ (U6375), Thiazolyl Blue (MTT), insulin were purchased from Sigma. Fetal calf serum was purchased from Sijiqin Hanzhou. The kits used in the example such as LDH, SOD, MDA kits were all purchased from Nanjing Jiancheng Bioengineering Institute. Trypsin, double-antibody, BCA protein assay kit were purchased from Beyotime. Other reagents such as dimethylsulfoxide (DMSO), hydrogen peroxide were domestic products with analytical purity and were purchased from Sinopharm Chemical Reagent CO., LTD, Shanghai. 25 cm$^2$ culture bottle, 96 well cell culture plate, 6 well cell culture plate, 60 mm cell culture dish, 50 mL centrifuge tube, 15 mL centrifuge tube were purchased from Corning, US. Disposable Syringe Filter was purchased from Millipore. The main instruments were Heal Force biosafety cabinet (Heal Force Bio-Meditech Holdings Limited, Hongkong, China), Countstar cell counter (Inno-Alliance Biotech, US), EVOS FL fluorescence microscope (Thermo Fisher), microplate reader (Finnpipette), 721 visible spectrophotometer (Shanghai INESA Analytical Instrument CO., LTD), thermostatic water bath (Shanghai Boxun), ultrasonic cracker (Ningbo Xinzhi Bioscience CO., LTD), inverted microscope (Nikon, Japan), refrigerated centrifuge (Thermo Fisher).

1.2 Materials

Rat small intestinal crypt epithelial cell (IEC-6 cell) was obtained from Chinese Academy of Medical Science, Cell Research Institute. Rat normal hepatocyte (BRL 3A Cell) was obtained from Chinese Academy of Sciences, Cell bank at Shanghai.

1.3 Test sample

Samples 1-3 were nucleotide composition for the use according to the invention. Comparative Samples 2 and 3 were nucleotide compositions disclosed in the prior art (above). Each sample was set with three concentrations of low, medium and high (62.5, 250, 1000 μmol/L, respectively).

1.4 Model and indicators

Oxygen damage is one of the most common and typical damage to living body (e.g. intestinal tract damage). It has been known that many diseases like those of digestive system of human and animals are closely associated with radical and reactive oxygen species, for example, oxygen damage has been shown to be one of the causes of inflammatory bowel disease. The redox reaction in cell is kept balance under normal physiological status and oxygen radicals and antioxidant system in body are important for the balance. If oxygen radicals are produced greatly or the function of antioxidant system is reduced, damage will be caused to tissue cells. SOD (superoxide dismutase) is an important antioxidase, which can clear $O_2^-$ produced by peroxide and protect cells from damage and thus is essential to oxidation/antioxidant balance in cell. As for the damage caused by oxide/peroxide, lactic dehydrogenase (LDH) is the indicator for cell membrane integrity or cell necrosis. In addition, oxide/peroxide in cells can attack polyunsaturated fatty acids in biofilms, which leads to lipid peroxidation and formation of lipid peroxide, for example malondialdehyde (MDA). Oxygen radicals not only cause cell damage by peroxidation of polyunsaturated fatty acids in biofilms, but lead to cell damage by decomposition product of lipid hydroperoxide, and thus the amount of MDA can generally reflect the degree of lipid peroxidation, thereby showing the degree of cell damage. Therefore, the concentrations, activities or changes thereof of the substances and cell survival rate can be used to evaluate the protective effects of the nucleotide composition for the use according to the invention. See, "Study on Healing effect of Rheum Tanguicum Polysaccharides (RTP) on intestinal epithelial cell injury and its mechanism", Thesis of Ph. D. Liu Lin-na, Fourth Military Medical University, May 1, 2005; "Protection of Longyanshe Polysaccharide on CCl4 - induced Damage of Primary Cultured Hepatocytes in Rats", Duan Xiaoqun et. al, China Pharmacy, 2006 vol 17, No 15, pp 1132-1143; "In vitro Protective Effects of Baoganning On Injury of Liver Cells Induced by Hydrogen Peroxide in Rats" Zhao Jinjun et. al, Journal of Guangzhou University of Traditional Chinese Medicine, 2002, vol 19, No 3, pp 211-213.

In addition, according to the inventor's experiments, $H_2O_2$ at 600 $\mu$mol/L will significantly lower survival rate of BRL 3A cells ($P<0.01$). Therefore, in oxidative damage test of BRL 3A, $H_2O_2$ at 600 $\mu$mol/L was used to induce cell oxidative damage. Similarly, $H_2O_2$ at 100 $\mu$mol/L was used to induce cell oxidative damage for IEC-6 cell.

According to the above information, in this example, the protective effect of the composition for the use according to the invention on cell oxidative damage was investigated by treating cells with nucleotide composition and inducing cell oxidative damage via $H_2O_2$. For BRL 3A cell, cell survival rate and SOD activity were tested. For IEC-6 cell, LDH activity and MDA content were tested.

1.5 Cell culture and sample preparation

IEC-6 cell was cultured in 37°C, 5%$CO_2$ incubator with RPMI-1640 medium containing 5%FBS, 2 mg/L insulin and passage was performed every four days. BRL 3A was cultured in 37°C, 5%$CO_2$ incubator with DMEM high sugar medium containing 10%FBS and passage was performed every five days. The nucleotide composition was formulated as 50 mmol/L of stock solution with PBS, which was filtered for sterilization and stored at -20°C for use.

1.6 <u>Procedures</u>

As for cell survival rate, the cells at logarithmic phase were inoculated in 96 well plate at 5000 /well. After adherence, the cells were incubated with medium containing various concentrations of nucleotide compositions for 24 h (each concentration set with 6 repeats). In the test, there were normal control without $H_2O_2$ and positive control with $H_2O_2$ only. After 24 h, $H_2O_2$ was added to induce cell oxidative damage, respectively. After 2h, MTT method was used to determine cell survival rate. Cell survival rate = OD value of test group / OD value of normal control $\times$ 100%.

For other indicators, the cells at logarithmic phase were inoculated in 60 mm cell culture dish at $7\times10^5$/dish. After adherence, the cells were incubated with medium containing various concentrations of nucleotide compositions for 24 h (each concentration set with 3 repeats). In the test, there were normal control without $H_2O_2$ and positive control with $H_2O_2$ only. After 24 h, $H_2O_2$ of a certain concentration was added to induce cell oxidative damage, respectively and culture was continued. After 2 h, liquid medium was sucked and centrifuged and the supernatant was taken for relevant analysis. The cells were digested with trypsin and washed with PBS once after centrifugation and then resuspended in 700 $\mu$l PBS, which were then cracked with supersonic and tested for all the indicators within 2 days.

1.7 Data analysis

All the data were shown as average $\pm$standard deviation ($\bar{x}\pm$s) and statistics analysis was performed with SPSS17.0 software, inter-group difference comparisons utilized one-way analysis of variance. $P<0.05$ means statistical significance and $P<0.01$ means high statistical significance.

2. Results

2.1 Cell survival rate assay

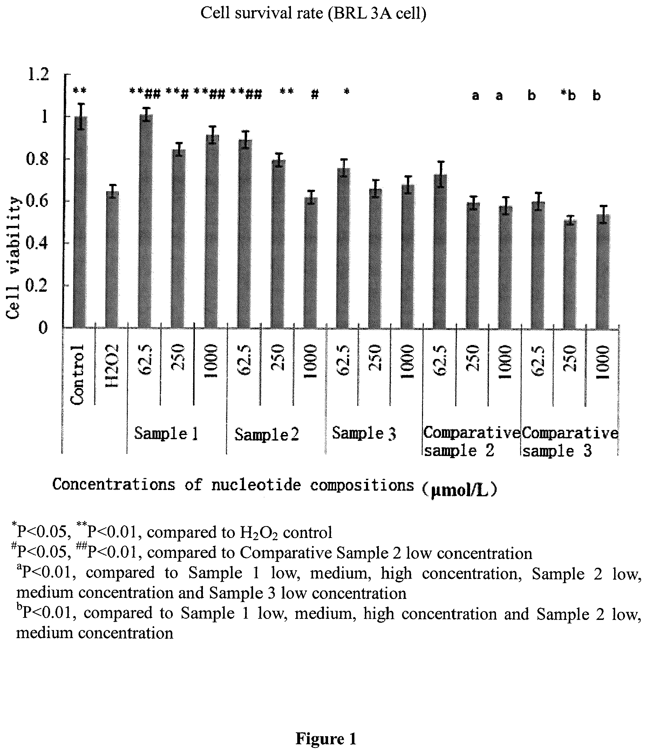

Cell survival rate results of BRL 3A cell were shown in Figure 1. According to this Figure, $H_2O_2$ treatment significantly lowered the cell survival rate of BRL 3A ($P<0.01$). Treating cells with nucleotide composition samples, cell survival rates were increased in various degrees, especially Samples 1 and 2. Statistical results showed, for all the concentration groups of Sample 1, low and medium concentration groups of Sample 2 and low concentration group of Sample 3, the cell survival rates were significantly higher than those of $H_2O_2$ control ($P<0.01$ or $P<0.05$). In addition, for all the concentration groups of Sample 1 and low concentration group of Sample 2, the cell survival rates were significantly higher than those of all the concentration groups of Comparative Samples 2 and 3 ($P<0.01$ or $P< 0.05$). Accordingly, treatment of cells with the nucleotide composition for the use according to the invention can effectively increase of survival rate the cell with oxidative damage, indicating protective effect against oxidative damage and further showing promotion reparation of cells after damage. Moreover, the protective effect is better than the nucleotide composition of the prior art.

2.2 SOD activity assay

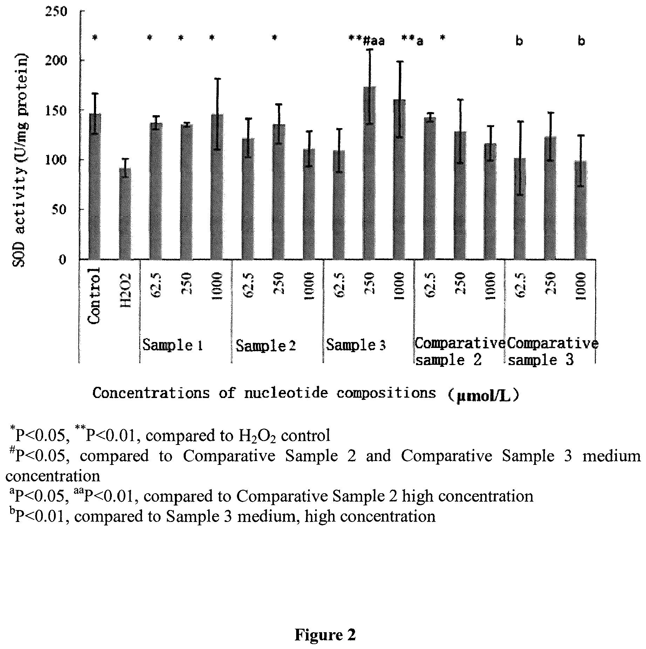

SOD activity results of BRL 3A cell were shown in Figure 2. According to this Figure, $H_2O_2$ treatment significantly lowered the SOD activities in cells ($P<0.01$). Treating cells with nucleotide composition samples, SOD activities in cells were increased in various degrees. For all the concentration groups of Sample 1 ($P<0.05$), medium concentration group of Sample 2 ($P<0.05$), medium and high concentration groups of Sample 3 ($P<0.01$), the SOD activities in cells were significantly higher than those of $H_2O_2$ control. Moreover, for medium concentration group of Sample 3, the SOD activities in cells were significantly higher than those of medium and high concentration groups of Comparative Sample 2 ($P<0.05$) and all concentration groups of Comparative Sample 3 ($P<0.05$). As for high concentration group of Sample 3, SOD activities in cells were significantly higher than those of high concentration group of Comparative Sample 2 ($P<0.05$) and low and high concentration groups of Comparative Sample 3 ($P<0.01$). Accordingly, the nucleotide composition for the use according to the invention can significantly increase concentration of antioxidative active substance (e.g. SOD) in cells with oxidative damage, indicating protective effect against oxidative damage. Moreover, the protective effect is better than the nucleotide composition of the prior art.

2.3. LDH activity assay

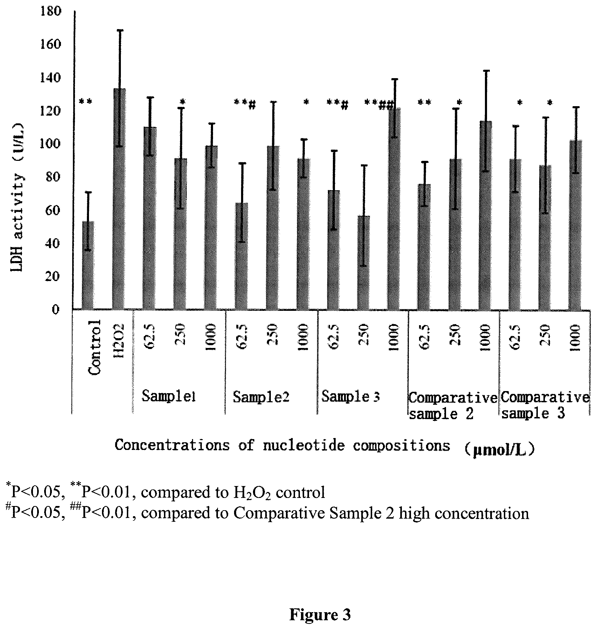

LDH activity results of IEC-6 cell were shown in Figure 3. According to this Figure, $H_2O_2$ treatment significantly made LDH content in liquid medium supernatant higher than that of the normal control ($P<0.01$). Treating cells with nucleotide composition, LDH contents in supernatant were lowered in various degrees. As for low concentration group of Sample 2 and medium concentration group of Sample 3, the LDH content decreased most significantly, showing no statistical difference as compared to normal control. Additionally, as compared to $H_2O_2$ control, in medium concentration group of Sample 1 ($P<0.05$), low and high concentration groups of Sample 2 ($P<0.01$ or $P<0.05$), low and medium concentration groups of Sample 3 ($P<0.01$), the LDH contents were lowered significantly. Moreover, as compared to high concentration of Comparative Sample 2, the LDH contents of low concentration group of Sample 2 ($P<0.05$) and low and medium concentration group of Sample 3 ($P<0.01$) were lowered significantly. Accordingly, the nucleotide composition for the use according to the invention can effectively lower the concentration of the substance indicative of undesired indicator (e.g. LDH) in supernatant of cells with oxidative damage, indicating protective effect against oxidative damage. Moreover, the protective effect is better than the nucleotide composition of the prior art.

2.4. MDA concentration assay

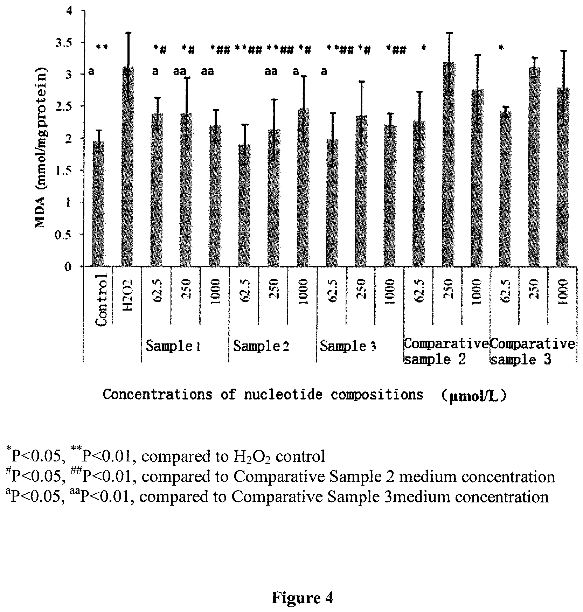

MDA concentration results of IEC-6 cell were shown in Figure 4. According to this Figure, $H_2O_2$ treatment of cells significantly increased MDA contents in cells ($P<0.01$). Treating cells with nucleotide composition samples, as for all concentration groups of Samples 1-3, MDA contents are decreased in some degree and were significantly lower than $H_2O_2$ control. On the contrary, medium and high concentration groups of Comparative Samples 2 and 3 were not significantly distinguished from $H_2O_2$ control. Accordingly, the nucleotide composition for the use according to the invention can effectively lower the concentration of the substance indicative of undesired indicator (e.g. lipid peroxide MDA) in cells with oxidative damage, indicating protective effect against oxidative damage. Particularly, the nucleotide composition for the use according to the invention can show significant and consistent protective effects under all the concentration ranges. On the contrary, the nucleotide composition in the prior art cannot show protective effect under relatively high concentrations (e.g. medium and high concentrations). This fact further shows advantage of the nucleotide composition for the use according to the invention over the prior art.

3. Discussion

According to the above results, treatment with the nucleotide composition for the use according to the invention can increase survival rate of the cells with oxidative damage, increase activity/concentration of the factor with protective effect from oxidation (e.g. SOD) in cells, lower activity/concentration of the factor indicative of undesired effect (e.g. LDH and MDA). Such facts means the nucleotide composition for the use according to the invention can provide protective effect against cell oxidative damage and the effect is better than the nucleotide composition in the prior art. Meanwhile, by increasing of the activity of the factor with protective effect and lower the content of undesired factor, the nucleotide composition can promote recovery of the balance condition of cell before damage, whereby promoting reparation after damage. Moreover, effects of the nucleotide composition for the use according to the invention can not only be shown on enterocytes but also on other part of the digestive system (e.g. liver), thereby showing positive effect on the whole digestive system.

Example 4: Cell proliferative effect

The instruments and reagents used in this example refer to example 3, wherein IEC-6 cell was used to verify promotion of cell proliferation of the nucleotide composition for the use according to the invention.

In this example, MTT method was used to detect the influence of nucleotide composition on IEC-6 cell. IEC-6 cells at logarithmic phase were digested with trypsin, which after centrifugation were prepared into cell suspension. Using cell counter, the cells were inoculated in 96 well plate at 5000/well, which was incubated overnight at 37°C, 5%$CO_2$ such that the cells were adherent. The liquid medium was exchanged the next day and each well was added with 200 $\mu$L of cell liquid medium containing various concentrations of nucleotide compositions (each sample was set with three concentrations of 62.5, 250, 1000 $\mu$mol/L). Each concentration of each sample was set with 6 repeats. Control group without addition of nucleotide composition and zero well without cells (only addition of normal medium) were also set. The liquid medium was exchanged every 24 h. At 24 h of nucleotide composition treatment, to each well of 96 well plate was added 10 $\mu$L of MTT with gentle shake and the plate was incubated in incubator for 4 h. The supernatant was discarded after 4 h and 150 $\mu$L/well of DMSO was added. The plate was shaked in dark. After dissolution of bluish violet formazan crystal, the plate was placed in microplate reader and OD value was determined at 490 nm wavelength. Zero was set with the blank group without cell and curve was drawn with OD value.

All the data were shown as average $\pm$standard deviation ($\bar{x}\pm$s) and statistics analysis was performed with SPSS 17.0 software, inter-group difference comparisons utilized one-way analysis of variance. $P<0.05$ means statistical significance and $P<0.01$ means high statistical significance.

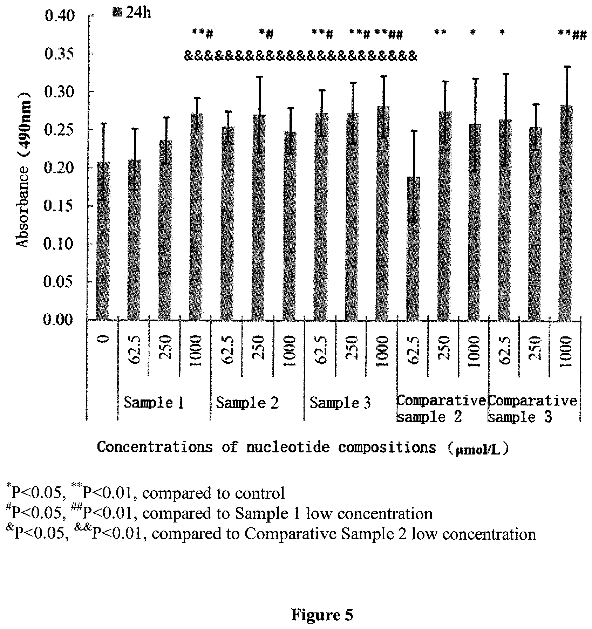

The results were shown in Figure 5. According to this Figure, after addition of nucleotide sample, proliferation of IEC-6 cell was significantly changed as compared to control. As for high concentration group of Sample 1, all concentration groups of Sample 3, the cell proliferation speeds were significantly higher than those of normal control ($P<0.01$); the cell proliferation speed of medium concentration group of Sample 2 was faster than normal control ($P<0.05$). The cell proliferation speed of low concentration group of Comparative Sample 2 was significantly lower than those of high concentration group of Sample 1, low and medium concentration groups of Sample 2, low, medium and high concentration groups of Sample 3 ($P<0.01$). The cell proliferation speed of high concentration group of Sample 2 was significantly higher than that of low concentration group of Comparative Sample 2 ($P< 0.05$). Accordingly, the nucleotide composition for the use according to the invention can promote cell proliferation, especially promote intestinal tract cell proliferation and growth, thereby showing the effect of promotion of enterocytes growth and enhance enterocytes proliferation. The effect was better than the nucleotide composition in the prior art.

Reference Example 5: Effect on intestinal tract beneficial bacterial flora

This example shows the nucleotide composition stimulation on intestinal tract beneficial bacterial flora. Each sample was set with 2 concentrations (low dosage: 1g/100ml; high dosage: 2g/100ml) and there was no nucleotide in control group.

1. Materials and methods

1.1. Main reagents

eosin methylene blue agar (EMB); Tryptose Sulfite Cycloserine Agar (TSC); Bifidobacterium Agar medium (BBL); sodium hydroxide; hydrochloric acid; Egg Yolk Emulsion 50%; D-cycloserine; nucleotide samples (Nanjing Tongkaizhaoye).

1.2. Main instruments

Automatic vertical steam sterilizer (LDZX-30FBS, Shanghai Shenan medical apparatus factory); $CO_2$ incubator (HH.CP-TW9, Shanghai Shenxian Thermostatic Equipment); electronic scales (XS1003S, Swiss); clean bench (VS-130L-U, Suzhou Antai Airtech CO., LTD.); Colony Counter (DIGITAL S 4905000, Selecta Spain); Sealed culture box (C-32, Mitsubishi Japan).

2. Procedures

2.1. Obtaining intestinal tract flora

In sterile bench, 0.5 g of faeces sample were taken from the anus of five SPF mice and placed in sterile tube, to which was added three sterile glass beads. The mixture was subjected to vortex and then to gradient dilution to $10^{-2}$ and used as seed solution for further test.

2.2. Preparation of liquid medium

Beef extract peptone liquid medium was used as base medium, in which nucleotide samples at 1 g/100 ml, 2 g/100 ml were added and the seed solution prepared in section 2.1 was added at 1% (volume).

2.3. Bacterial flora counting

With specific selective medium (BBL agar), the Bifidobacteria in liquid medium was cultured under anaerobic condition for 48 h at $36\pm1°C$ and then bacterial flora counting was performed and expressed as Lg CFU/ml.

2.4. Data statistic

Statistics analysis was performed with SPSS17.0 software and one-way analysis of variance was used to compare the data of various groups, wherein $\alpha=0.05$ was used as criterion for difference determination. The results were shown in Table 4.

Table 4

| Grouping | Dosage | Bifidobacteria |
|---|---|---|
| Control group | | $7.00\pm0.00$ |
| Sample 1 | low dosage | $7.15\pm0.17$ |
| | high dosage | $8.30\pm0.35*$ |
| Sample 2 | low dosage | $7.89\pm0.47*$ |
| | high dosage | $8.24\pm0.28*$ |
| Sample 3 | low dosage | $7.63\pm0.17*$ |
| | high dosage | $7.80\pm0.23*$ |
| * Significant increase | | |

Statistical results showed, taking Bifidobacteria as an example, after treatment with the nucleotide composition growth of Bifidobacteria was significantly increased as compared to control (Lg CFU), indicating that the nucleotide composition can stimulate growth of intestinal tract beneficial bacterial flora.

Reference Example 6: Infant milk powder preparation (1000 kg, dry addition)

Raw materials of the milk powder were: skimmed milk powder 140 kg, lactose 260 kg, desalted whey powder 200 kg, whey protein powder (WPC34%) 100 kg, corn oil 52 kg, soybean oil 42 kg, sunflower seed oil 170 kg, oligofructose powder 4.8 kg, galactooligosaccharide syrup 12 kg, mixed nutrients 6.4 kg and soyabean lecithin 2 kg. After homogenous mixing, the above raw materials were subjected to pasteurization, homogenization, evaporation and concentration and spray drying to form semiproduct as powder, to which was added 0.38 kg nucleotide composition, 0.1 kg Bifidobacteria, 4.32 kg DHA, 6.0 kg ARA. After mixing with dry mixer, the uniformly mixed milk powder was packed with nitrogen to obtain the final product.

Reference Example 7: Infant milk powder preparation (1000 kg, dry addition)

Inner Mongolia Yili Industrial Group Co., Ltd., et al. Skimmed milk powder 150 kg, lactose 250 kg, desalted whey powder 190 kg, whey protein powder (WPC34%) 110 kg, corn oil 44 kg, soybean oil 44 kg, sunflower seed oil 175 kg, oligofructose powder 4.5 kg, galactooligosaccharide syrup 11 kg, mixed nutrients 7 kg, 2 kg soyabean lecithin were mixed uniformly and then subjected to pasteurization, homogenization, evaporation and concentration and spray drying to form semiproduct as powder. Then 0.5 kg nucleotide composition, 0.1 kg Bifidobacteria, 5.2 kg DHA and 6.7 kg ARA were added. After mixing with dry mixer, the uniformly mixed milk powder was packed with nitrogen to obtain the final product.

Reference Example 8: Infant milk powder food preparation (1000 kg, wet addition)

Skimmed milk powder 150 kg, lactose 250 kg, desalted whey powder 190 kg, whey protein powder (WPC34%) 110 kg, corn oil 43 kg, soybean oil 44.7 kg, sunflower seed oil 178 kg, oligofructose powder 4.5 kg, galactooligosaccharide syrup 11 kg, mixed nutrients 7 kg, 0.4 kg nucleotide composition and 2 kg soyabean lecithin were mixed uniformly and subjected to pasteurization, homogenization, evaporation and concentration and spray drying to form semiproduct as powder, to which were added 0.1 kg Bifidobacteria, 3.9 kg DHA and 5.4 kg ARA. After mixing with dry mixer, the uniformly mixed milk powder was packed with nitrogen to obtain the final product.

Example 9: Infant liquid milk preparation (based on 100g liquid milk)

The liquid milk contained the follows nutritional ingredients:
Protein 2.2 g, fat 3.0g, lactose 9.0 g, vitamin A 80 $\mu$g RE, vitamin D 1.5 $\mu$g, vitamin E 1mg $\alpha$-TE, vitamin K1 6 $\mu$g, vitamin B1 70 $\mu$g, vitamin B2 70 $\mu$g, vitamin B6 200 $\mu$g, vitamin B12 0.5 $\mu$g, nicotinic acid 350 $\mu$g, folic acid 3.5 $\mu$g, pantothenic acid 200 $\mu$g, vitamin C 7 mg, biotin 2 $\mu$g, sodium 50 mg, potassium 70 mg, copper 80 $\mu$g, magnesium 30 mg, iron 1 mg, zinc 0.7 mg, calcium 80 mg, phosphorus 45 mg, iodine 20 $\mu$g, chlorine 100 mg, lactoferrin 10 mg and 2.7 mg nucleotide composition for the use according to the invention, wherein the energy is about 300kJ.
Fat is provided by anhydrous milk fat, soybean oil, corn oil, sunflower seed in any ratio and combination, wherein based on 100 g of total ingredients, 0.5 g of linoleic acid was included. The preparing process was as follows (raw materials and process comply with relevant national standards):

1. Receiving, checking and optimizing the raw materials.
2.

(1) Dissolving protein (including casein, whey protein, lactoferrin), B vitamins and vitamin C, and nucleotide composition for the use according to the invention with warm water;
(2) Dissolving carbohydrates raw materials and food additives like carrageenan, glyceryl monostearate and guar gum with warm water; dissolving minerals with warm water; dissolving other raw materials with fatty feed liquid at 40°C~50°C; and mixing the above three dissolved feed liquids uniformly;
(3) Subjecting the feed liquid obtained in step (1) to membrane filtration for sterilization;
(4) Subjecting the feed liquid obtained in step (2) which has been mixed uniformly to UHT (ultra - high temperature instantaneous sterilization) for sterilization;
(5) Mixing the feed liquids obtained in step (3) and step (4) under sterile condition and metered to total amount of the ingredients with water;
(6) Subjecting the above mixed feed liquids to sterile homogenization; and
(7) Filling under sterile condition and packing.

**Claims**

1. A nucleotide composition for use in a method of promoting reparation of enterocytes after damage caused by oxidation, wherein on the weight basis, the composition consists of CMP, AMP, UMP and GMP, and the proportions of the components are CMP: 58-72%, AMP: 6-14%, UMP: 10-18% and GMP: 8-14%, provided that sum of the components is 100%, wherein the method involves administering the nucleotide composition to a subject.

2. The nucleotide composition for use according to claim 1, wherein the proportions of the components are CMP: 60-70%, AMP: 8-12%, UMP: 12-16% and GMP: 10-12%, provided that sum of the components is 100%.

3. The nucleotide composition for use according to claim 1, wherein the proportions of the components are CMP: 60-65%, AMP: 10-12%, UMP: 14-16% and GMP: 11-12%, provided that sum of the components is 100%.

4. The nucleotide composition for use according to claim 1, wherein the proportions of the components are CMP:

65-70%, AMP: 8-10%, UMP: 12-14% and GMP: 10-11%, provided that sum of the components is 100%.

5. The nucleotide composition for use according to any one of claims 1-4, wherein the proportions of the components are

    CMP: 60%, AMP: 12%, UMP: 16% and GMP: 12%; or
    CMP: 65%, AMP: 10%, UMP: 14% and GMP: 11%; or
    CMP: 70%, AMP: 8%, UMP: 12% and GMP: 10%.

6. A food for use in a method of promoting reparation of enterocytes after damage caused by oxidation,
wherein the food is in the form of a liquid dairy product and comprises based on 100g liquid dairy product, energy 250kJ-355kJ, and the following ingredients: protein beyond lactoferrin 1.75g-4.26g, fat 1.75g-4.97g, vitamin A 42.5$\mu$g-191.7$\mu$g RE, vitamin D 0.625$\mu$g-2.6625$\mu$g, vitamin E$\geq$0.375mg $\alpha$-TE, vitamin K1$\geq$2.5$\mu$g, vitamin B1$\geq$27.5$\mu$g, vitamin B2$\geq$27.5$\mu$g, vitamin B6$\geq$27.5$\mu$g, vitamin B12$\geq$0.1$\mu$g, nicotinic acid or nicotinamide$\geq$275$\mu$g, folic acid$\geq$2.5$\mu$g, pantothenic acid>175$\mu$g, vitamin C$\geq$4.5mg, biotin$\geq$1$\mu$g, sodium$\leq$71mg, potassium 45mg-244.95mg, copper 17.5$\mu$g-124.25$\mu$g, magnesium $\geq$3.5mg, iron 0.625mg-1.775mg, zinc 0.25mg-1.065mg, calcium $\geq$42.5mg, phosphorus $\geq$20.75mg, iodine $\geq$3.5$\mu$g, chlorine $\leq$184.6mg, lactoferrin 5-13mg and carbohydrates;
wherein the nucleotide composition according to any one of claims 1 to 5 is present in an amount of 2.64-7.66mg and the amount of carbohydrates is such that the energy provided by carbohydrates, protein and fat is 250kJ-355kJ; and
wherein the method involves administering the food to a subject.

## Patentansprüche

1. Nukleotidzusammensetzung zur Verwendung in einem Verfahren zur Förderung der Reparatur von Enterozyten nach einer durch Oxidation verursachten Schädigung, wobei die Zusammensetzung auf Gewichtsbasis aus CMP, AMP, UMP und GMP besteht und die Komponenten folgende Mengenverhältnisse aufweisen: CMP: 58-72%, AMP: 6-14%, UMP: 10-18% und GMP: 8-14%, mit der Maßgabe, dass die Summe der Komponenten 100% beträgt, wobei das Verfahren die Verabreichung der Nukleotidzusammensetzung an ein Subjekt umfasst.

2. Nukleotidzusammensetzung zur Verwendung gemäß Anspruch 1, wobei die Komponenten folgende Mengenverhältnisse aufweisen: CMP: 60-70%, AMP: 8-12%, UMP: 12-16% und GMP: 10-12%, mit der Maßgabe, dass die Summe der Komponenten 100% beträgt.

3. Nukleotidzusammensetzung zur Verwendung gemäß Anspruch 1, wobei die Komponenten folgende Mengenverhältnisse aufweisen: CMP: 60-65%, AMP: 10-12%, UMP: 14-16% und GMP: 11-12%, mit der Maßgabe, dass die Summe der Komponenten 100% beträgt.

4. Nukleotidzusammensetzung zur Verwendung gemäß Anspruch 1, wobei die Komponenten folgende Mengenverhältnisse aufweisen: CMP: 65-70%, AMP: 8-10%, UMP: 12-14% und GMP: 10-11%, mit der Maßgabe, dass die Summe der Komponenten 100% beträgt.

5. Nukleotidzusammensetzung zur Verwendung gemäß mindestens einem der Ansprüche 1 bis 4, wobei die Komponenten folgende Mengenverhältnisse aufweisen:

    CMP: 60%, AMP: 12%, UMP: 16% und GMP: 12%; oder
    CMP: 65%, AMP: 10%, UMP: 14% und GMP: 11%; oder
    CMP: 70%, AMP: 8%, UMP: 12% und GMP: 10%.

6. Nahrungsmittel zur Verwendung in einem Verfahren zur Förderung der Reparatur von Enterozyten nach einer durch Oxidation verursachten Schädigung,
wobei das Nahrungsmittel in Form eines flüssigen Milchprodukts vorliegt und auf der Basis von 100g flüssigem Milchprodukt eine Energie von 250kJ - 355kJ aufweist und die folgenden Bestandteile umfasst: 1,75g - 4,26g Protein abgesehen von Lactoferrin, 1,75g - 4,97g Fett, 42,5$\mu$g - 191,7$\mu$g RE Vitamin A, 0,625$\mu$g - 2,6625$\mu$g Vitamin D, $\geq$ 0,375mg $\alpha$-TE Vitamin E, $\geq$ 2,5$\mu$g Vitamin K1, $\geq$ 27,5$\mu$g Vitamin B1, $\geq$ 27,5$\mu$g Vitamin B2, $\geq$ 27,5$\mu$g Vitamin B6, $\geq$ 0,1$\mu$g Vitamin B12, $\geq$ 275$\mu$g Nikotinsäure oder Nicotinamide, $\geq$ 2,5$\mu$g Folsäure, $\geq$ 175$\mu$g Pantothensäure, $\geq$ 4,5mg Vitamin C, $\geq$ 1$\mu$g Biotin, $\leq$ 71mg Natrium, 45mg - 244,95mg Kalium, 17,5$\mu$g - 124,25$\mu$g Kupfer, $\geq$ 3,5mg Magnesium, 0,625mg - 1,775mg Eisen, 0,25mg - 1,065mg Zink, $\geq$ 42,5mg Kalzium, $\geq$ 20,75mg Phosphor, $\geq$ 3,5$\mu$g Jod, $\leq$ 184,6mg

Chlor, 5mg - 13mg Lactoferrin und Kohlenhydrate;
wobei die Nukleotidzusammensetzung gemäß mindestens einem der Ansprüche 1 bis 5 in einer Menge von 2,64mg - 7,66 mg vorhanden ist und die Menge der Kohlenhydrate so ist, dass die durch Kohlenhydrate, Protein und Fett bereitgestellte Energie 250kJ - 355kJ beträgt; und
wobei das Verfahren die Verabreichung des Nahrungsmittels an ein Subjekt beinhaltet.

**Revendications**

1. Composition de nucléotides pour l'utilisation dans une méthode de promotion de la réparation d'entérocytes après un dommage cause par l'oxydation, dans laquelle sur la base du poids, la composition est constituée de CMP, AMP, UMP et GMP, et les proportions des composants sont CMP : 58-72%, AMP : 6-14%, UMP : 10-18% et GMP : 8-14%, à condition que la somme des composants soit 100%, dans laquelle la méthode implique l'administration de la composition de nucléotides à un sujet.

2. La composition de nucléotides pour l'utilisation selon la revendication 1, dans laquelle les proportions des composants sont CMP : 60-70%, AMP : 8-12%, UMP : 12-16% et GMP : 10-12%, à condition que la somme des composants soit 100%.

3. La composition de nucléotides pour l'utilisation selon la revendication 1, dans laquelle les proportions des composants sont CMP : 60-65%, AMP : 10-12%, UMP : 14-16% et GMP : 11-12%, à condition que la somme des composants soit 100%.

4. La composition de nucléotides pour l'utilisation selon la revendication 1, dans laquelle les proportions des composants sont CMP : 65-70%, AMP : 8-10%, UMP : 12-14% et GMP : 10-11%, à condition que la somme des composants soit 100%.

5. La composition de nucléotides pour l'utilisation selon l'une quelconque des revendications 1-4, dans laquelle les proportions des composants sont

   CMP : 60%, AMP : 12%, UMP : 16% et GMP : 12% ; ou
   CMP : 65%, AMP : 10%, UMP : 14% et GMP : 11% ; ou
   CMP : 70%, AMP : 8%, UMP : 12% et GMP : 10%.

6. Aliment pour l'utilisation dans une méthode de promotion de la réparation d'entérocytes après un dommage causé par l'oxydation,

   dans laquelle l'aliment est sous la forme d'un produit laitier liquide et comprend sur la base de 100g de produit laitier liquide 250kJ-355kJ d'énergie et les ingrédients suivants : 1,75g-4,26g de protéines hors de la lactoferrine, 1,75g-4,97g de graisse, 42,5μg-191,7μg équivalents de rétinol de vitamine A, 0,625μg-2,6625μg de vitamine D, vitamine E>0,375mg équivalents d'a-tocophérol, vitamine K1≥2,5μg, vitamine B1≥27,5μg, vitamine B2≥27,5μg, vitamine B6≥27,5μg, vitamine B12≥0,1μg, acide nicotinique ou nicotinamide≥275μg, acide folique≥2,5μg, acide panthothénique≥175μg, vitamine C≥4,5mg, biotine≥1μg, sodium≤71mg, potassium 45mg-244,95mg, cuivre 17,5μg-124,25μg, magnésium ≥3,5mg, fer 0,625mg-1,775mg, zinc 0,25mg-1,065mg, calcium≥42,5mg, phosphore≥20,75mg, iode≥3,5μg, chlore≤184,6mg, 5-13mg de lactoferrine et des carbohydrates ;
   dans laquelle la composition de nucléotides selon l'une quelconque des revendications 1 à 5 est présente dans une quantité de 2,64-7,66mg et la quantité de carbohydrates est telle que l'énergie fournie par les carbohydrates, les protéines et la graisse est 250kJ-355kJ ; et
   dans laquelle la méthode implique l'administration de l'aliment à un sujet.

Cell survival rate (BRL 3A cell)

Concentrations of nucleotide compositions (μmol/L)

$^*$P<0.05, $^{**}$P<0.01, compared to $H_2O_2$ control
$^\#$P<0.05, $^{\#\#}$P<0.01, compared to Comparative Sample 2 low concentration
$^a$P<0.01, compared to Sample 1 low, medium, high concentration, Sample 2 low, medium concentration and Sample 3 low concentration
$^b$P<0.01, compared to Sample 1 low, medium, high concentration and Sample 2 low, medium concentration

**Figure 1**

Figure 2

*P<0.05, **P<0.01, compared to $H_2O_2$ control
#P<0.05, compared to Comparative Sample 2 and Comparative Sample 3 medium concentration
aP<0.05, aaP<0.01, compared to Comparative Sample 2 high concentration
bP<0.01, compared to Sample 3 medium, high concentration

Concentrations of nucleotide compositions （μmol/L）

*P<0.05, **P<0.01, compared to $H_2O_2$ control
#P<0.05, ##P<0.01, compared to Comparative Sample 2 high concentration

**Figure 3**

Concentrations of nucleotide compositions (μmol/L)

*$P<0.05$, **$P<0.01$, compared to $H_2O_2$ control
#$P<0.05$, ##$P<0.01$, compared to Comparative Sample 2 medium concentration
a$P<0.05$, aa$P<0.01$, compared to Comparative Sample 3medium concentration

**Figure 4**

**P<0.05, **P<0.01, compared to control
#P<0.05, ##P<0.01, compared to Sample 1 low concentration
&P<0.05, &&P<0.01, compared to Comparative Sample 2 low concentration

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4994442 A
- EP 1549158 A
- US 2010284980 A1
- WO 2014042504 A1
- AU 9332003 B

**Non-patent literature cited in the description**

- technical standards of examination and evaluation for healthcare food (2003). functional test method. 2003
- Study on Healing effect of Rheum Tanguicum Polysaccharides (RTP) on intestinal epithelial cell injury and its mechanism. Thesis of Ph. D. Liu Lin-na. Fourth Military Medical University, 01 May 2005
- **DUAN XIAOQUN.** Protection of Longyanshe Polysaccharide on CCl4 - induced Damage of Primary Cultured Hepatocytes in Rats. *China Pharmacy,* 2006, vol. 17 (15), 1132-1143
- **ZHAO JINJUN.** In vitro Protective Effects of Baoganning On Injury of Liver Cells Induced by Hydrogen Peroxide in Rats. *Journal of Guangzhou University of Traditional Chinese Medicine,* 2002, vol. 19 (3), 211-213